# EUROPEAN PATENT APPLICATION

(11) **EP 4 568 339 A1**
(43) Date of publication of application: **11.06.2025**
(21) Application number: 23849894.3
(22) Date of filing: 20.07.2023
(51) Int. Cl.: H04W 28/06, H04W 72/51, H04W 84/12

(54) **COMMUNICATION DEVICE, COMMUNICATION METHOD, AND PROGRAM**

(30) Priority: 05.08.2022 JP 2022125626
(71) Applicant: CANON KABUSHIKI KAISHA, Tokyo 146-8501 (JP)
(72) Inventor: SOMA Tomoyasu, Tokyo 146-8501 (JP)
(74) Representative: Canon Europe Limited
(86) International application number: PCT/JP2023/026487
(87) International publication number: WO 2024/029339

(57) **Abstract**

A communication apparatus transmits, in a case where an Ultra High Reliability (UHR) Multi User (MU) Physical Layer Protocol Data Unit (PPDU) with a bandwidth exceeding 320 Mhz is transmitted, the UHR MU PPDU including, after the U-SIG, an RU Allocation-1 sub field, an RU Allocation-2 sub field, and an RU Allocation-3 sub field. Further, the communication apparatus transmits, in a case where the UHR MU PPDU with a bandwidth of 320 Mhz is transmitted, the UHR MU PPDU including, after the U-SIG, the RU Allocation-1 sub field and the RU Allocation-2 sub field but not including the RU Allocation-3 sub field.

## Description

### Technical Field

The present invention relates to a communication control technique for wireless Local Area Networks (LANs).

### Background Art

The Institute of Electrical and Electronic Engineers (IEEE)802.11 standard is known as a communication standard for Wireless Local Area Networks (WLANs). With the IEEE802.11be standard currently being developed among the IEEE801.11 standard series, the maximal value 320 MHz of the frequency bandwidth is under consideration as a measure for achieving a higher throughput than that of the IEEE802.11ax standard. There are four frequency bandwidths having been conventionally used for wireless LANs, 20 MHz, 40 MHz, 80 MHz, and 160 MHz.

Patent Document 1 discloses a mechanism for wirelessly communicating with a plurality of terminals by using the Orthogonal Frequency-Division Multiple Access (OFDMA) technique in communication conforming to the IEEE801.11 standard series.

### Citation List

### Patent Literature

PTL 1: Japanese Patent Laid-Open No. 2018-050133

### Summary of Invention

### Technical Problem

A number of standards have been developed in the past, and new standards are expected to be developed in the future. To improve the communication throughput, new standards are expected to use bandwidths exceeding 320 MHz under consideration in the 802.11 be standard.

However, none of conventional wireless LAN standards define a mechanism for notifying a partner apparatus of communication with a frequency bandwidth exceeding 320 MHz. When performing multi-user communication, it is necessary to allocate some of the bandwidths to be used (Resource Unit or RU) to a partner apparatus. However, the 802.11be standard and earlier standards define the maximum bandwidth of usable electric waves as 320 MHz. For communication in a frequency bandwidth exceeding 320 Mhz, there has been no suitable method for allocating a suitable RU to a partner apparatus in the relevant bandwidth or no suitable frame configuration for notifying the partner apparatus of the allocation status.

The present invention has been embodied in view of at least one of the above-described issues. According to an aspect of the present invention, the present invention is directed to enabling a communication apparatus capable of performing communication by using a bandwidth exceeding 320 MHz to communicate RU allocation information through a suitable frame configuration.

### Solution to Problem

According to an aspect of the present invention, communication apparatus includes a transmission unit configured to transmit an Ultra High Reliability (UHR) Multi User (MU) Physical Layer Protocol Data Unit (PPDU) including a Legacy-Signal Field (L-SIG) and a Universal-Signal Field (U-SIG), wherein, in a case where the UHR MU PPDU with a bandwidth exceeding 320 Mhz is transmitted, the transmission unit transmits the UHR MU PPDU including, after the U-SIG, an RU Allocation-1 sub field, an RU Allocation-2 sub field, and an RU Allocation-3 sub field, and wherein, in a case where the UHR MU PPDU with a bandwidth of 320 Mhz is transmitted, the transmission unit transmits the UHR MU PPDU including, after the U-SIG, the RU Allocation-1 sub field and the RU Allocation-2 sub field but not including the RU Allocation-3 sub field.

### Advantageous Effects of Invention

According to an aspect of the present invention, a communication apparatus capable of performing communication by using a bandwidth larger than 320 MHz is able to communicate RU allocation information through a suitable frame configuration.

### Brief Description of Drawings

[Fig. 1] Fig. 1 illustrates an example of a network configuration of a wireless communication system.
[Fig. 2] Fig. 2 illustrates an example of a hardware configuration of a communication apparatus.
[Fig. 3] Fig. 3 illustrates an example of a physical (PHY) frame structure of an Ultra High Reliability Physical Layer Protocol Data Unit (UHR PPDU).
[Fig. 4] Fig. 4 illustrates an example of correspondences between resource unit (RU) allocation patterns and RU allocation sub fields.
[Fig. 5] Fig. 5 illustrates an example of correspondences between RU allocation patterns and RU allocation sub fields.
[Fig. 6] Fig. 6 illustrates an example of combinations of Multiple Resource Unit (MRU) allocation patterns and RUs.
[Fig. 7] Fig. 7 illustrates an example of MRU allocation patterns and RUs.
[Fig. 8] Fig. 8 illustrates an example of MRU allocation patterns and RUs.
[Fig. 9] Fig. 9 illustrates an example of MRU allocation patterns and RUs.
[Fig. 10] Fig. 10 is a schematic view illustrating content channels.
[Fig. 11] Fig. 11 is a flowchart illustrating an example of control of the communication apparatus 101.
[Fig. 12] Fig. 12 is a schematic view illustrating a modification.

### Description of Embodiments

Exemplary embodiments will be described in detail below with reference to the accompanying drawings. The following exemplary embodiments do not limit the present invention within the scope of the appended claims. Although a plurality of features is described in the exemplary embodiments, not all of the plurality of features is indispensable to the present invention, and the plurality of features may be arbitrarily combined. In the accompanying drawings, identical or similar components are assigned the same reference numerals, and duplicated descriptions thereof will be omitted.

### <First Exemplary Embodiment>

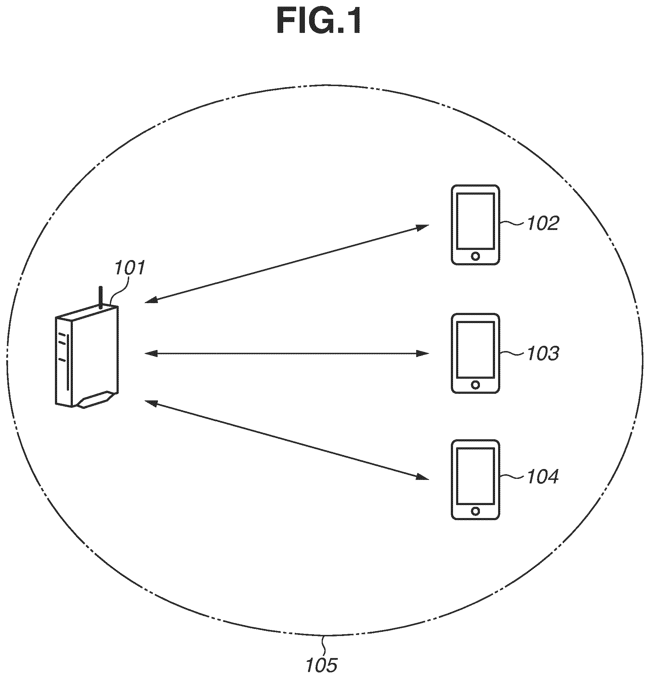

Fig. 1 illustrates an example configuration of a wireless communication network in a wireless communication system according to a first exemplary embodiment. The present wireless communication network includes one access point (AP) and three different stations (STAs). An AP 101 and STAs 102 to 104 are examples of communication apparatuses. The AP 101 and the STAs 102 to 104 are collectively referred to as communication apparatuses 101 to 104.

The AP 101 and the STAs 102 to 104 conforming to IEEE802.11be are configured to perform wireless communication conforming to the IEEE802.11be standard and earlier standards. IEEE is an abbreviation for Institute of Electrical and Electronics Engineers. The IEEE802.11be standard is also referred to as the Extreme High Throughput (EHT) standard based on the name of Task Group (TG) in charge of the standard development. According to the present exemplary embodiment, IEEE802.11ax developed before 802.11be is referred to as the 6th generation standard or IEEE802.11GEN6 (or simply GEN6) in conformity to Wi-Fi6, which is an interconnectivity authentication program supported by the relevant standard. Likewise, the IEEE802.11be standard is referred to as the 7th generation standard or IEEE802.11GEN7 (or simply GEN7) in conformity to Wi-Fi7 (tentative name), which is an applicable authentication program.

The AP 101 and the STAs 102 to 104 are configured to perform wireless communication conforming to successor standards of the IEEE802.11be standard aiming for a maximum transmission rate of 46.08 Gbps, i.e., successor standards aiming for a maximum transmission rate higher than 90 Gbps to 100 Gbps. The successor standard of IEEE802.11be is referred to as the 8th generation standard or IEEE802.11GEN8 (or simply GEN8) in conformity to Wi-Fi8 (tentative name), which is an applicable authentication program. The relevant successor standard is also referred to as a communication standard conforming to Wi-Fi8.

As a new target to be achieved, GEN8 as a successor standard of IEEE802.11be aims for supporting high-reliability communication and low-latency communication. The Ultra High Reliability (UHR) SG has been established as a Study Group (SG) for preparing for the development of the relevant successor standard. The present exemplary embodiment uses an abbreviated name "UHR" as a name for identifying the communication standard conforming to the above-described successor standard.

The name UHR is conveniently provided in consideration of the target to be achieved by the successor standard and characteristic features of the relevant standard. Therefore, the name may be changed to another one when the standard has been established. Note that the scope of the specification and appended claims are essentially applicable to all successor standards of 802.11be, i.e., successor standards that can support wireless communication using bandwidths exceeding 320 Mhz.

According to the present exemplary embodiment, unless a particular apparatus is specified, a communication apparatus that provides access point functions is referred to as an "AP STA" or simply "AP" without a reference number. A station (terminal) connected with an access point is referred to as a "non-AP STA" or simply "STA". non-AP is an abbreviation for non-Access Point.

An access point (e.g., AP 101) that supports a communication standard conforming to GEN8 (Wi-Fi8) is referred to as a "UHR AP STA". A station (terminal) that supports a communication standard conforming to GEN8 (Wi-Fi8) may be referred to as a "non-AP UHR STA".

Although Fig. 1 illustrates an example of a wireless communication network including one AP and three STAs, the wireless communication network may include more or less communication apparatuses. For example, there may be no AP when communication is performed between STAs. Referring to Fig. 1, a circle 101 indicates the coverage of the network formed by the AP 102. This coverage may include a larger or smaller range.

The communication apparatuses 101 to 104 can perform communication in the 2.4 GHz, 5 GHz, 6 GHz, and 7 Ghz bands. The communication apparatuses 101 to 104 can operate in the 20 MHz, 40 MHz, 80 MHz, 160 MHz, 320 MHz, 480 MHz, and 640 MHz channel widths. However, at least one of the STAs 102 to 104 may operate only with a channel width of 320 MHz or 480 MHz or less.

The communication apparatuses 101 to 104 can perform Multi-User (MU) communication based on the Orthogonal Frequency Division Multiple Access (OFDMA) technique. The communication apparatuses 101 to 104 can also perform MU communication based on the Multi-User Multi-Input Multi-Output (MU-MIMO) technique. Further, the communication apparatuses 101 to 104 can perform MU communication based on both the OFDMA and the MU-MIMO techniques.

More specifically, multiple STAs among the AP 101 and the STAs 102 to 104 can perform simultaneous communication through one channel (including a channel having a combined channel width of 40 MHz or higher). In the OFDMA technique, one channel is divided into a plurality of sub channels called Resource Units (RUs) each of which is allocated to a different STA (or an STA group including multiple STAs). Then, the AP and the multiple STAs communicate with each other at the same time through one channel by using the allocated RUs, thus implementing multiple access. In the MU-MIMO technique as a spatial multiplexing method, a plurality of spatial streams is formed by using multiple antennas, and each spatial stream is allocated to a different STA. The AP and the multiple STAs communicate with each other at the same time through one channel.

The communication apparatuses 101 to 104 conform to the IEEE802.11be standard (Wi-Fi7 standard) and the GEN8 standard, which is a successor standard, and may further conform to the IEEE801.11 standards earlier than the IEEE802.11be standard. More specifically, the communication apparatuses 101 to 104 may conform at least one of the IEEE802.11a/b/g/n/ac/ax/ standards.

In addition to the IEEE801.11 standard series, the communication apparatuses 101 to 104 may conform to other communication standards such as Bluetooth^{®}, Near Field Communication (NFC), Ultra Wide Band (UWB), ZigBee, and Multi Band OFDM Alliance (MBOA). UWB is an abbreviation for Ultra Wide Band, and MBOA is an abbreviation for Multi Band OFDM Alliance. NFC is an abbreviation for Near Field Communication. UWB includes wireless Universal Serial Bus (USB), wireless 1394, and WiNET. The communication apparatuses 101 to 104 may also conform to a wired communication standard such as a wired LAN.

Specific examples of the AP 101 include a wireless LAN router and a personal computer (PC), but are not limited thereto. The AP 101 may be an information processing apparatus such as a wireless chip capable of performing wireless frame communication conforming to UHR.

Specific examples of the STAs 102 to 104 include cameras, tablet computers, smartphones, PCs, portable telephones, video cameras, head sets, and smart glasses, but are not limited thereto. The STAs 102 to 104 may be information processing apparatuses such as wireless chips capable of performing wireless frame communication conforming to UHR.

Although the wireless network in Fig. 1 includes one AP and three different STAs, the numbers of APs and STAs are not limited thereto. For example, the wireless network may further include another STA. In this case, the number of channels of the link to be established and the channel width do not matter.

### (Apparatus Configuration)

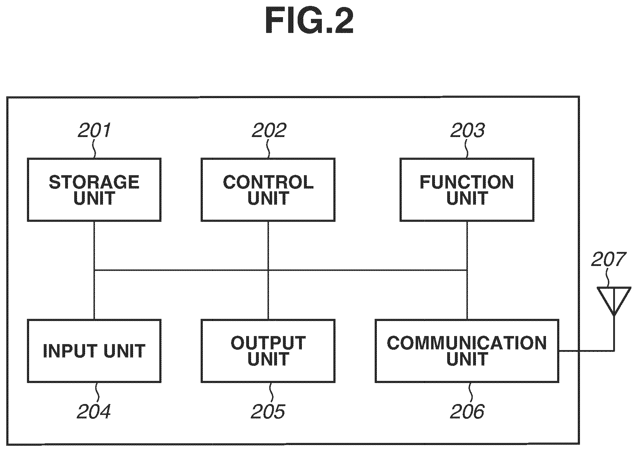

A hardware configuration of the communication apparatuses 101 to 104 will be described below with reference to Fig. 2. Fig. 2 illustrates an example of the hardware configuration of the communication apparatuses (AP and STAs). As an example of the hardware configuration, each communication apparatus includes a storage unit 201, a control unit 202, a function unit 203, an input unit 204, an output unit 205, a communication unit 206, and an antenna 207. The communication apparatus may have multiple antennas.

The storage unit 201 including at least one memory such as a read only memory (ROM) and a random access memory (RAM) stores computer programs for performing various operations (described below) and stores various information such as communication parameters for wireless communication. ROM is an abbreviation for Read Only Memory, and RAM is an abbreviation for Random Access Memory. The storage unit 201 may also include a hard disk, a nonvolatile memory, and other storage media in addition to the memories, ROM and RAM. The storage unit 201 may also include a plurality of memories.

The control unit 202 includes at least one processor including a central processing unit (CPU) and a micro processing unit (MPU), and controls the entire communication apparatus by executing computer programs stored in the storage unit 201.

The control unit 202 may control the entire communication apparatus through the collaboration between the computer programs stored in the storage unit 201 and an operating system (OS). Thus, the storage unit 201 and the control unit 202 configure what is called a computer. The control unit 202 also generates data and signals (wireless frames) to be transmitted in communication with other communication apparatuses. CPU is an abbreviation for Central Processing Unit, and MPU is an abbreviation for Micro Processing Unit. The control unit 202 may also include a plurality of processors such as multi-core processors which control the entire AP 101 in a cooperative way. The control unit 202 may be configured to perform part of processing by using an Application Specific Integrated Circuit (ASIC), Digital Signal Processor (DSP), and Field Programmable Gate Array (FPGA).

The control unit 202 also controls the function unit 203 to perform wireless communication, imaging, printing, projection, and other predetermined processing. The function unit 203 is a hardware component used by the communication apparatus to perform predetermined processing.

For example, if the communication apparatus is a camera such as a digital still camera, the function unit 203 serves as an imaging unit for capturing an image of the periphery via a camera unit (not illustrated) in the communication apparatus. For example, if the communication apparatus is a printer, the function unit 203 serves as a printing unit for performing print processing on a sheet such as paper. For example, if the communication apparatus is a projector or smart glass, the function unit 203 serves as a projection unit for performing image or video projection processing on a projection surface. If the communication apparatus is a smart glass, the projection surface is the retina of an end user. Data processed by the function unit 203 include data stored in the storage unit 201 and data received from communication apparatuses such as other APs and STAs via the communication unit 206 (described below). Further, the communication apparatus such as the AP 101 can also provide a network storage function such as a Network Attached Storage (NAS). The relevant function is provided to other communication apparatuses as a web service such as a network storage service. For example, other communication apparatuses connect with the network storage service provided by the AP 101 by using a protocol such as Server Message Block (SMB), File Transfer Protocol (FTP), and Web-based Distributed Authoring and Versioning (WebDAV), upload a file to the relevant storage, and download a file to the relevant storage. The upload and download communications are also implemented between apparatuses through wireless frame communication conforming to UHR.

The input unit 204 receives various operations from a user. The output unit 205 outputs various types of data to the user via a monitor screen and a speaker. Outputs by the output unit 205 may include display on the monitor screen, an audio output to the speaker, and a vibratory output. The input unit 204 and the output unit 205 may be implemented as a single module like a touch panel. Each of the input unit 204 and the output unit 205 may be integrated with or separated from each communication apparatus.

The communication unit 206 controls wireless frame communication conforming to UHR. In addition to wireless frame communication conforming to UHR, the communication unit 206 can control wireless frame communication conforming to other IEEE801.11 series standards and control wired communication such as a wired LAN. The communication unit 206 controls the antenna 207 to transmit and receive signals such as wireless frames for wireless communication generated by the control unit 202.

If the communication apparatus conforms to the NFC or Bluetooth^{®} standard in addition to the IEEE801.11 series communication standards, the communication unit 206 can be configured to control wireless communication conforming to these communication standards. If the communication apparatus can perform wireless communication conforming to the above-described plurality of different communication standards, the communication apparatus may include communication units and antennas conforming to the different communication standards. The communication apparatus communicates image data, document data, and video data with other communication apparatuses via the communication unit 206. The antenna 207 may be configured as a unit separate from the communication unit 206 or integrated with the communication unit 206 as one module.

The antenna 207 is capable of performing communication in the 2.4 GHz, 5 GHz, 6 GHz, and 7 Ghz bands. The AP 101 may be provided with one or more antennas, or different antennas for different frequency bands. If the AP 101 is provided with a plurality of antennas, the AP 101 may include the communication units 206 corresponding to the different antennas. According to the present exemplary embodiment, at least the AP 101 and either one STA are provided with a set of two or more antennas for performing Multi-Input and Multi-Output (MIMO) communication. Although Fig. 2 illustrates one antenna 207, the communication apparatus may include, for example, two or more (two or more sets of) antennas applicable to different frequency bands.

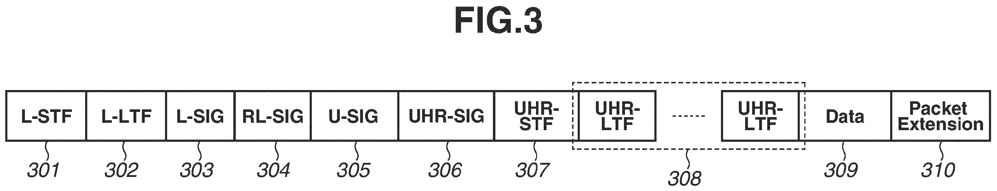

An example of a configuration of a wireless frame conforming to UHR will be described below. Fig. 3 illustrates an example of a UHR Multi User (MU) PPDU for multi-user communication transmitted by the communication apparatus 101. PPDU is an abbreviation for Physical Layer (PHY) Protocol Data Unit.

A wireless frame UHR MU PPDU is a PPDU used by the communication apparatus to perform multi-user communication (MU communication). This frame includes an L-STF 301, L-LTF 302, L-SIG 303, RL-SIG 304, U-SIG 305, UHR-SIG 306, UHR-STF 307, and UHR-LTFs 308 from the top portion. The UHR-LTFs 308 are followed by data 309 and Packet Extension 310. STF is an abbreviation for Short Training Field, LTF is an abbreviation for Long Training Field, and SIG is an abbreviation for Signal. L- is an abbreviation for Legacy, and L-SIG is an abbreviation for Legacy-Signal Field. L-STF is an abbreviation for Legacy Short Training Field. L-SIG is also referred to as a Non-HT Signal field. L-STF is also referred to as a Non-HT STF. L-LTF is also referred to as a Non-HT LTF. RL-SIG is an abbreviation for Repeated Legacy Signal. RL-SIG is also referred to as a Repeated Non-HT Signal. HT is an abbreviation for High Throughput.

As illustrated in Fig. 3, the top portion of the PPDU includes an L-STF 301, L-LTF 302, and L-SIG 303 for securing backward compatibility with the IEEE802.11a/b/g/n/ax standard. The L-LTF is placed immediately after the L-STF, and the L-SIG is placed immediately after the L-LTF. RL-SIG (Repeated L-SIG, RL-SIG) 304 is placed immediately after the L-SIG. With the RL-SIG 304, the contents of the L-SIG are repetitively transmitted. The RL-SIG allows the receiver to recognize that the PPDU conforms to the IEEE802.11ax standard and subsequent standards.

The L-STF 301 is used for PHY frame signal detection, Automatic Gain Control (AGC), and timing detection. The L-LTF is used to synchronize the frequency and time with high accuracy and acquire propagation channel information (channel state information (CSI)). The L-SIG is used to transmit control information including information about the data transmission rate and PHY frame length. Apparatuses conforming to the IEEE802.11a/b/g/n/ax/be standard and apparatuses conforming to the GEN8 standard, which is a successor standard of the IEEE802.11be standard, can decode the above-described fields.

The PPDU includes the U-SIG 305 placed immediately after the RL-SIG 304. The Universal-Signal Field (U-SIG) is a field for transmitting control information for each standard to be commonly used in the IEEE802.11be (GEN7) standard and subsequent standards. The U-SIG includes a BandWidth sub field indicating the bandwidth for PPDU transmission, and a UHR-SIG MCS indicating an MCS of the UHR-SIG. The U-SIG includes control information such as a Number Of UHR-SIG Symbols sub field indicating the number of symbols of the UHR-SIG.

For example, the BandWidth sub field is formed of 3 bits. The communication apparatus 101 stores the value corresponding to the bandwidth subjected to the PPDU transmission in the relevant sub field. According to the present exemplary embodiment, the communication apparatus 101 stores either one of the values corresponding to 20 Mhz, 40 Mhz, 80 Mhz, 160 Mhz, 320 Mhz-1, 320 Mhz-2, 480 Mhz, and 640 Mhz. Values corresponding to bandwidths where the frequency band overlaps, such as 480 Mhz-1 and 480 Mhz-2, can also be specified. In this case, the relevant sub field includes 4 or more bits.

The Ultra High Reliability Signal Field (UHR-SIG) is placed immediately after the U-SIG. The UHR-SIG field includes control information that does not fit into the U-SIG and control information to be notified to each user at the time of multi-user transmission. A UHR-SIG 406 is modulated with the MCS specified in the UHR-SIG MCS field in the U-SIG. Following the UHR-SIG 306, a UHR-STF 306, which is the STF for the UHR, and a UHR-LTF 607, which is the LTF for the UHR are placed. The UHR-LTF is information used for MIMO estimation and beam forming estimation. A plurality of UHR-LTFs may be placed based on the number of MIMO antennas and the necessity of beam forming.

The UHR-SIG 306, UHR-STF 307, and UHR-LTF 308 fields included in the PPDU can be decoded by the communication apparatus supporting UHR-based wireless frame communication.

The L-STF 301, L-LTF 302, L-SIG 303, RL-SIG 304, U-SIG 305, UHR-SIG 306, UHR-STF 307, and UHR-LTFs 308 are collectively referred to as a PHY preamble.

The UHR-SIG 306 closely related to multi-user transmission will be described in more detail below. The UHR-SIG 306 includes two different fields: a common field and a user field. The user field includes control information for each user. The common field includes the sub fields illustrated in the following Table 1.

**[Table 1]**

| | Sub field | Number of bits | Description |
|---|---|---|---|
| Common field | U-SIG Over Flow | 16 | Control information that does not fit into symbols of U-SIG. Stores information about Spatial Reuse, information about GI, the number of symbols of UHR-LTF, LDPC, and information about FEC. |
| | RU Allocation-1 | N × 9 | Indicates RU allocation used in data portion of frequency axis. |
| | | | N=1: UHR MU PPDU allocation with 20 MHz and 40 MHz |
| | | | N=2: UHR MU PPDU allocation with 80 MHz, 160 MHz, 320 MHz, 480 MHz, and 640 MHz |
| | CRC | 4 | Calculated CRC value |
| | | | |
| | RU Allocation-2 | M × 9 | Provided for 160 MHz or higher. |
| | | | Indicates RU allocation used in data portion of frequency axis. |
| | | | M=2: UHR MU PPDU allocation with 160 MHz |
| | | | M=6: UHR MU PPDU allocation with 320 MHz |
| | | | M=10: UHR MU PPDU allocation with 480 MHz |
| | | | M=14: UHR MU PPDU allocation with 640 MHz |
| | CRC | 4 | Calculated CRC value |
| | | | |

The common field includes a U-SIG Overflow sub field and a plurality of RU Allocation sub fields.

The U-SIG Overflow sub field stores control information that has not been stored in the U-SIG to be commonly used for IEEE802.11be and subsequent standards.

The RU Allocation sub field will be described below. This sub field includes two different sub fields, an RU Allocation-1 sub field and an RU Allocation-2 sub field, depending on the bandwidth to be used for communication.

The RU Allocation-1 sub field includes N x 9 bits, and the RU Allocation-2 includes M x 9 bits. Both fields indicate RU allocation information.

Whether the RU Allocation-2 sub field is to be placed and what size each RU Allocation is to be of can be varied by the bandwidth used by the communication apparatus 101 to transmit the UHR MU PPDU.

For example, when the RU Allocation-1 sub field indicates the RU allocation for using the 20 MHz bandwidth, the relevant sub field includes 9 bits (N = 1). The relevant 9-bit field indicates the RU allocation in the 20 MHz bandwidth.

The 9-bit size is an example of a predetermined bit size required to represent the RU allocation in the 20 Mhz bandwidth. The 9-bit size is also referred to as a predetermined number of bits. Although, according to the present exemplary embodiment, the predetermined number of bits is 9, the present exemplary embodiment is not limited thereto. The values of the multipliers N and M of the predetermined number of bits are determined by the transmission bandwidth of the UHR MU PPDU to be transmitted. Since the 9-bit size indicates the RU allocation of the 20 Mhz bandwidth, the values of N and M increase with increasing transmission bandwidth. According to the present exemplary embodiment, the sizes of the RU Allocation-1 and the RU Allocation-02 can be varied by the values of N and M, and the communication apparatus notifies a partner apparatus of the RU allocation when using a bandwidth of 20 Mhz or higher based on the concept "Content Channel" (described below).

The present exemplary embodiment assumes the transmission of wireless frames conforming to UHR with a bandwidth of up to 640 MHz. For a bandwidth of 160 MHz or higher, the RU Allocation-2 sub field is also used at the same time to indicate the RU allocation.

The values of N and M are determined by the bandwidth to be used, and are set to values corresponding to the bandwidth to be used for data communication. The correspondences between N and M and each bandwidth (20 MHz band, 40 MHz band, 80 MHz band, 160 MHz band, 320 MHz band, 480 MHz band, and 640 MHz band) are as illustrated in Table 1.

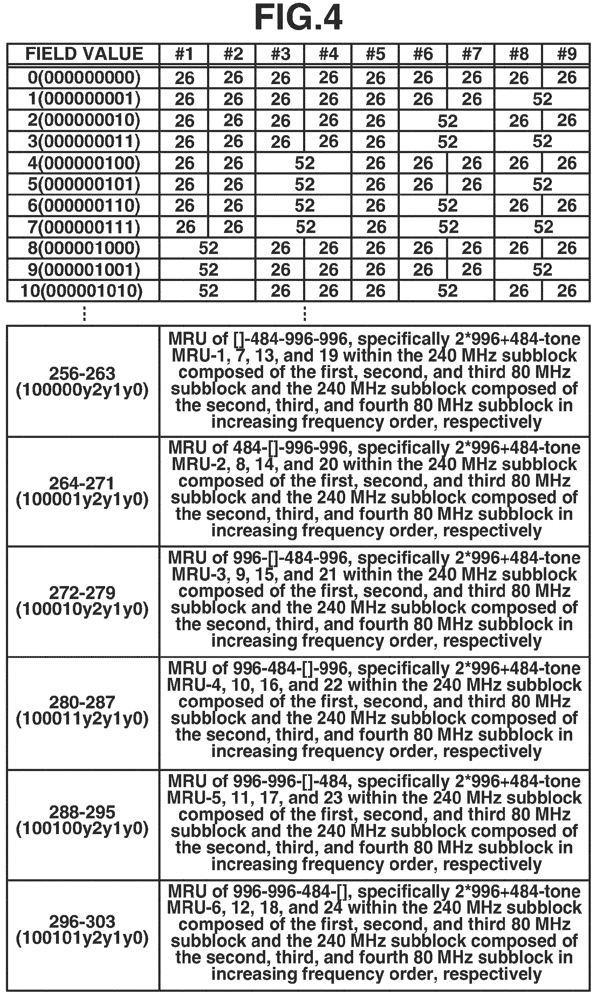

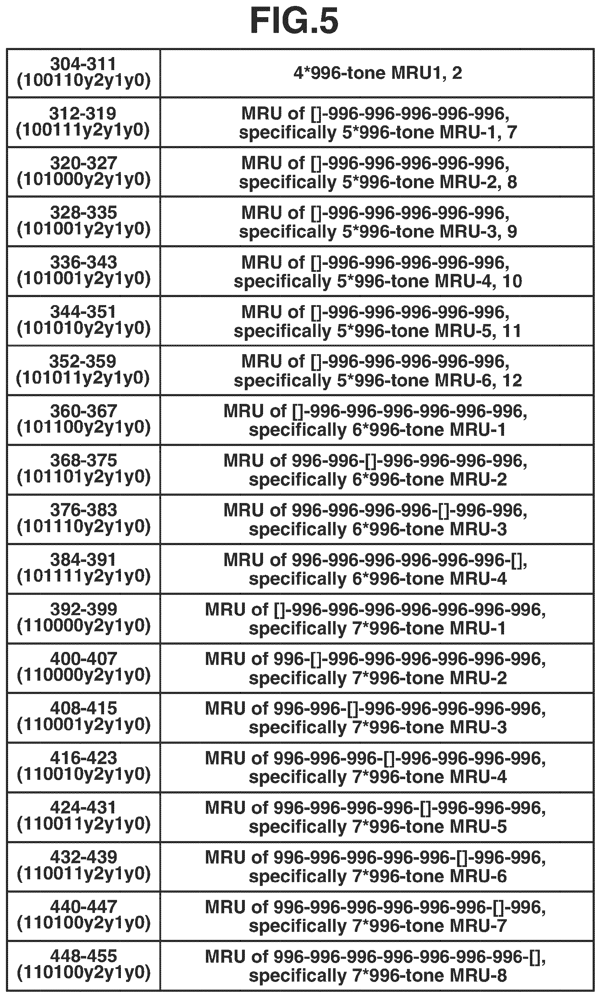

Figs. 4 and 5 illustrate examples of correspondences between the RU allocation patterns and the RU Allocation sub fields. The RU Allocation sub field includes at least 26 sub carriers. For example, the 20 MHz band can be divided into nine different RUs each of which includes 26 sub carriers. As illustrated in Figs. 4 and 5, if the RU Allocation sub field includes a bit stream "000000000", the bit stream indicates that the 20 MHz bandwidth is divided into nine different RUs each of which includes 26 sub carriers. If the RU Allocation sub field includes a bit stream "000000001", the bit stream indicates that the 20 MHz bandwidth is divided into seven different RUs each of which includes 26 sub carriers, and one RU including 52 sub carriers.

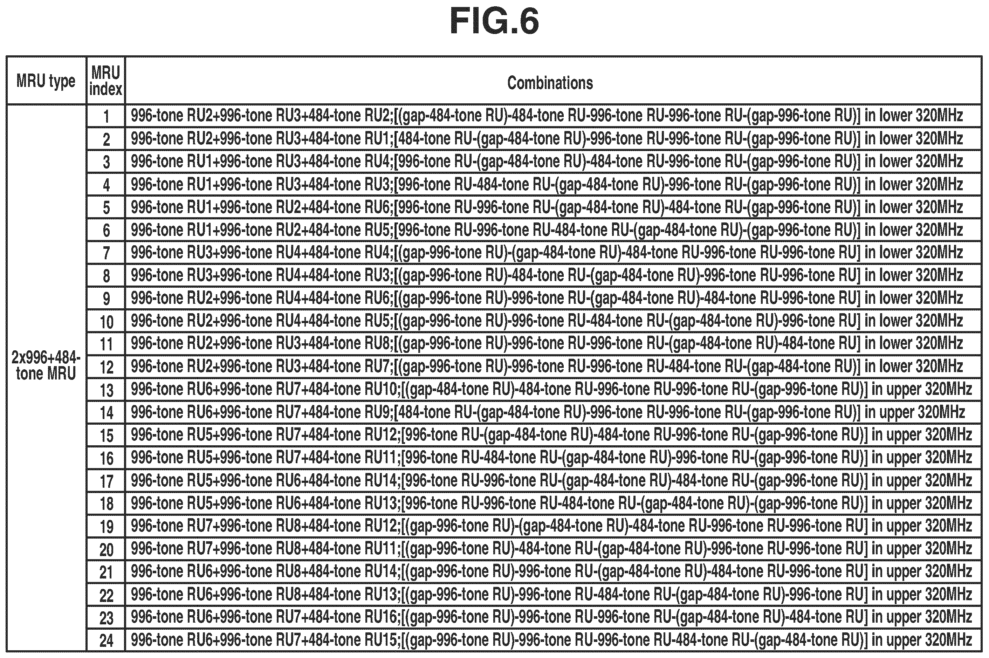

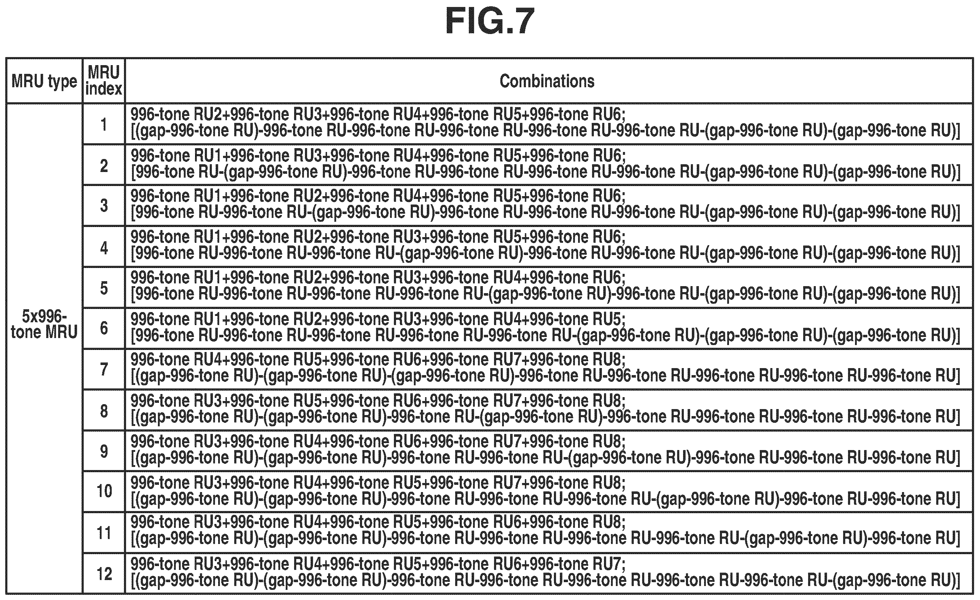

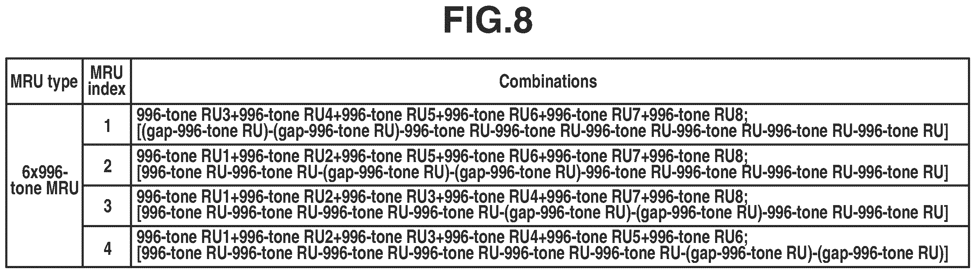

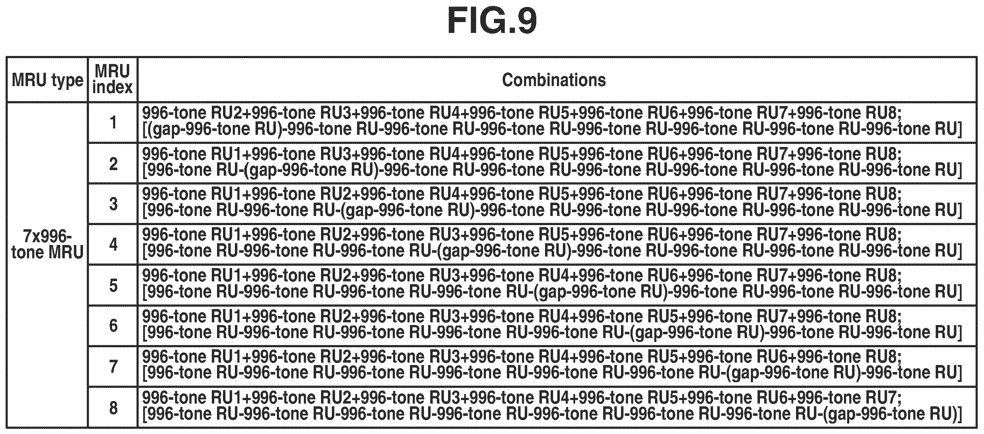

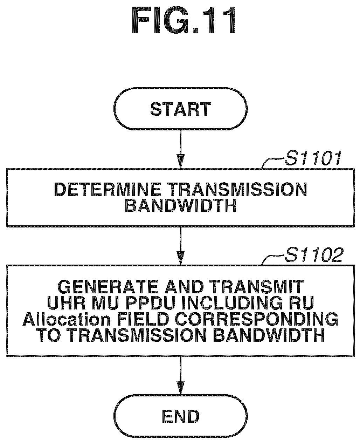

With the RU allocation including 242 or more sub carriers conforming to MU-MIMO communication, the bit stream of the RU Allocation indicates the number of multiplexed STAs. For example, description y2y1y0 (each of y0, y1, and y2 is 0 or 1) indicates that 2 ^ 2 × y2 + 2 ^ 1 × y1 + y0 + 1 STAs are multiplexed with the allocated RU. In a case where the RU combination is expressed by using a Multiple Resource Unit (MRU) as a group of a plurality of RUs, the combination of the MRU index and the RU for the relevant MRU type is applied. Figs. 6 to 9 illustrate examples of combinations of the MRU indexes and the RUs for each MRU type. Assuming the use of the bandwidths of up to 640 MHz, the present exemplary embodiment expresses RU combination corresponding to new RU Allocation, MRU type, MRU index, and MRU index. When determining the MRU to be used by the STA for transmission in uplink MU communication, the MRU index is determined by the value of the RU Allocation field and the value included in the user field of a trigger frame indicating uplink communication. When determining the MRU to be used by the STA for reception in downlink MU communication, the MRU index is determined by the value of the RU Allocation field of the UHR MU PPDU and the value included in the user field of the UHR-SIG. Transmission control for the UHR MU PPDU will be described below with reference to Fig. 11. The communication apparatus 101 determines whether to transmit the UHR MU PPDU, based on the data volume to be communicated with other communication apparatuses, the capability of other communication apparatuses, and the number of communication apparatuses to be communicated with.

When the communication apparatus 101 determines to transmit the UHR MU PPDU, the communication apparatus 101 performs the processing in the flowchart illustrated in Fig. 11. Each piece of processing of the flowchart illustrated in Fig. 11 is implemented when the processor of the control unit 202 executes a computer program stored in the storage unit 201. Some pieces of processing such as transmission and modulation are implemented when the processor of the control unit 202 and the ASIC, DSP, or FPGA of the communication unit 206 and the control unit 202 operate in collaboration.

In step S1101, the control unit 202 of the communication apparatus determines the transmission bandwidth subjected to the UHR MU PPDU transmission, based on the data volume to be communicated with other communication apparatuses, the capability of other communication apparatuses, and the number of communication apparatuses to be communicated with. When the control unit 202 of the communication apparatus completes the processing for determining the transmission bandwidth, the processing proceeds to step S1102.

In step S1102, in collaboration with the communication unit 206, the control unit 202 of the communication apparatus generates the UHR MU PPDU including the RU Allocation sub field corresponding to the transmission bandwidth and transmits the UHR MU PPDU to the outside via antennas. The processing will be described in more detail below. The communication apparatus 101 determines the size of the RU to be allocated to other communication apparatus in the transmission bandwidth determined in step S1101. This determination is made to allow the combinations that can be expressed by the indexes illustrated in Figs. 4 to 9. Referring to the indexes illustrated in Figs. 4 to 9, the communication apparatus 101 configures at least one RU Allocation sub field to implement the indexes corresponding to the combinations of the RUs allocated to each of the communication apparatuses. This processing enables storing the information about the RU allocation applicable to the bandwidths of up to 640 MHz, in the RU Allocation sub field.

The communication apparatus 101 suitably configures other values of the UHR-SIG based on communication conditions and communication settings to generate the UHR-SIG. The communication apparatus 101 also suitably configures the U-SIG, L-SIG, and other fields based on communication conditions and communication settings to generate the UHR MU PPDU, and transmits the generated UHR MU PPDU with the transmission bandwidth determined in step S1001. In this case, the communication apparatus 101 includes data (MAC frames) for other communication apparatuses multiplexed in the frequency domain, in the data field of the UHR MU PPDU.

Reception control will be described below. An example case where the communication apparatus 101 (AP 101) includes data for the STAs 102 to 104 in the UHR MU PPDU of the 20 MHz transmission bandwidth and transmits the UHR MU PPDU.

The STAs 102 to 104 decode the U-SIG 305 and the UHR-SIG 306 fields included in the UHR MU PPDU received from the AP 101. Since the bandwidth of the above-described UHR MU PPDU in the example is 20 MHz, the RU Allocation-1 sub field in the common field is formed of 9 bits. The STAs 102 to 104 interpret the data from the AP 101 according to the RU allocation indicated by the RU Allocation-1 sub field and the control information for each STA included in the user field. If the data includes data indicating a trigger frame for uplink transmission, each STA starts communication when the Short Interframe Space (SIFS) time has elapsed since the reception of the trigger frame. More specifically, each STA transmits wireless frames called the UHR TB PPDU having data stored in the frequency domain corresponding to the RU allocated by a trigger frame, to the AP 101. TB PPDU is an abbreviation for Trigger Based PPDU.

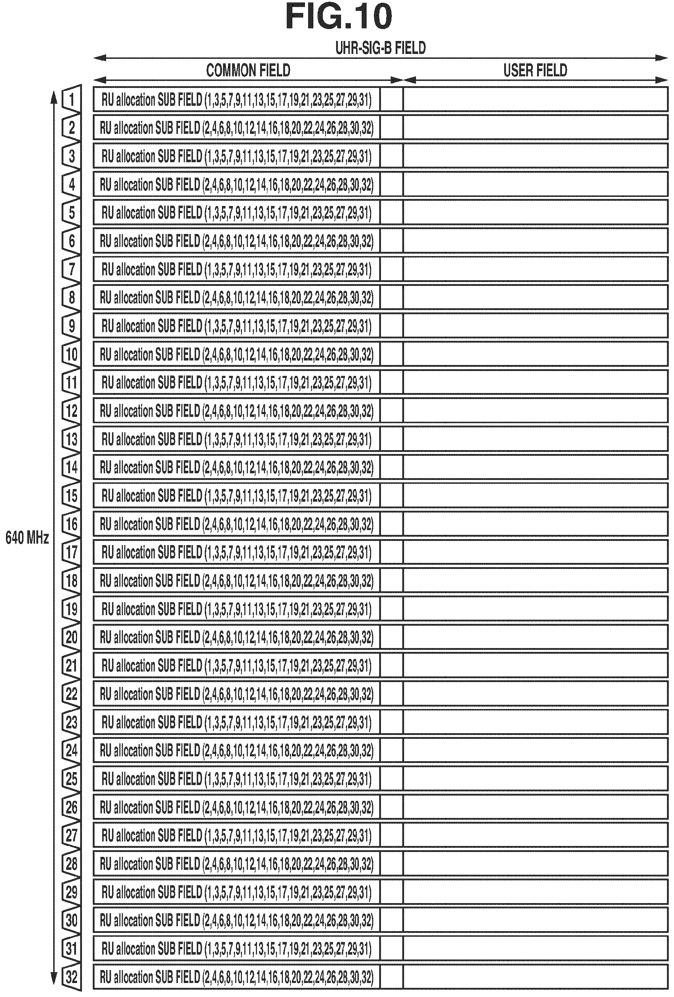

The content channel of the UHR-SIG will be described below with reference to Fig. 10. When using a bandwidth exceeding 20 Mhz, the communication apparatus 101 notifies a communication partner of the RU allocation status by communicating the UHR-SIG having different contents by using a mechanism called the content channel.

Fig. 10 illustrates an example configuration of a content channel in communication using the 640 MHz transmission bandwidth. The RU Allocation sub field indicates the RU allocation with 242 sub carriers for every 9 bits. The 20-MHz sub band is equivalent to an RU with 242 sub carriers. More specifically, the RU Allocation sub field indicates the RU allocation for the 20-MHz sub band for every 9 bits.

In communication using the 640 MHz band, the AP 101 divides the bandwidth into 20-MHz sub bands and allocates the RU for each sub band. Although the 640 MHz band can be divided into 32 20-MHz sub bands, the RU Allocation sub fields of all the sub bands are not included in one UHR-SIG field. As illustrated in Fig. 10, the AP 101 generates and transmits a first UHR-SIG field having the RU allocation information for the odd-numbered sub bands, and generates and transmits a second UHR-SIG field having the RU allocation information for the even-numbered sub bands, in order of frequency.

In the odd-numbered sub channels, the AP 101 communicates the first UHR-SIG indicating the RU allocation for each of the 1st, 3rd, 5th, 7th, 9th, 11th, 13th, 15th, 17th, 19th, 21st, 23rd, 25th, 27th, 29th, and 31st sub bands for every 9 bits.

In addition to the UHR-SIG field indicating the RU allocations of the odd-numbered 20-MHz sub bands, the AP 101 communicates the second UHR-SIG field indicating the RU allocations of the even-numbered 20-MHz sub bands. In the even-numbered sub channels, the AP 101 communicates the second UHR-SIG field indicating the RU allocation for each of the 2nd, 4th, 6th, 8th, 10th, 12th, 14th, 16th, 18th, 20th, 22nd, 24th, 26th, 28th, 30th, and 33rd sub bands for every 9 bits.

In summary, the first UHR-SIG field transmitted by using the odd-numbered sub bands functions as a first channel for delivering information content indicating a first RU allocation status. The first UHR-SIG field transmitted by using the even-numbered sub bands functions as a second channel for delivering information content indicating a second RU allocation status.

The STA can suitably interpret the first UHR-SIG field and the second UHR-SIG field transmitted in each channel and obtain the RU allocation information for 640 Mhz.

To indicate the RU allocation of 16 sub bands in this way, 18 bits are required for two RU Allocation-1 sub fields, and 126 bits are required for 14 RU Allocation-2 sub fields, i.e., a total of 144 bits is required. In communication using 640 MHz band, the AP 101 transmits the first and the second UHR-SIG fields including the RU allocation-1 and RU allocation-2 sub fields formed of 144 bits to the STAs 102 to 104. Information for a total of 288 bits enables notifying of information about the RU allocation of the 640 Mhz bandwidth. Depending on the modulation method and encoding ratio of the UHR-SIG field, the RU Allocation-2 sub field can be divided into a plurality of different symbols.

A case of transmitting the UHR MU PPDU of other bandwidths will be briefly described below. When transmitting the MU PPDU with the 40 Mhz bandwidth, the communication apparatus transmits to a sub band on the lower frequency side in the 40 Mhz bandwidth, the first UHR-SIG field including the RU Allocation-1 sub field representing the RU allocation status in the relevant sub band. This sub field is formed of 9 bits. The communication apparatus also transmits to an even-numbered sub band or the second sub band, i.e., a sub band on the higher frequency side in the 40 Mhz bandwidth, the second UHR-SIG field including the RU Allocation-1 sub field representing the RU allocation status in the relevant sub band. This sub field is also formed of 9 bits.

Likewise, when using other bandwidths with N = 2, the communication apparatus generates and transmits the UHR-SIG-B field having the RU allocation information for the odd-numbered sub bands, and generates and transmits the UHR-SIG-B field having the RU allocation information for the even-numbered sub bands. The bandwidths with N = 2 include the 80 MHz band, 160 MHz band, 160 MHz band, 320 MHz band, 480 MHz band, and 640 MHz band.

In this way, the AP 101 generates and transmits the UHR MU PPDU including the RU Allocation-1 sub field or including both the RU Allocation-1 and the RU Allocation-2 sub fields based on the transmission bandwidth. This processing enables the AP 101 to notify the STAs 102 to 104 of the RU allocation information.

The STAs 102 to 104 receive and interpret the UHR MU PPDU including the RU Allocation-1 sub field or including both the RU Allocation-1 and the RU Allocation-2 sub fields. This processing enables each STA to acquire the RU allocation information.

Each RU Allocation sub field of the UHR-SIG is a field included in the UHR MU PPDU but not included in the PPDU of other types. For example, the RU Allocation sub field is not included in the UHR Extended Range (ER) SU PPDU communicated in single-user communication with an extended communication distance. The RU Allocation sub field is not included in the above-described UHR TB PPDU either.

The RU allocation indicated by the bit stream of the RU Allocation sub field according to the present exemplary embodiment is to be considered as illustrative. The RU allocation indicated by the bit stream of the RU Allocation sub field may be partly different from that according to the present exemplary embodiment.

### <Second Exemplary Embodiment>

The first exemplary embodiment has been described above centering on an example where the RU allocation information is stored in the RU Allocation-1 and the RU Allocation-2 in the UHR-SIG of the preamble before notification. A second exemplary embodiment will be described below centering on a mechanism for using the RU Allocation-3 and notifying of the RU allocation information in the preamble to facilitate the interoperation with the IEEE802.11be standard.

The configuration of the communication system and various hardware configurations are similar to those according to the first exemplary embodiment. Descriptions similar to those according to the first exemplary embodiment will be suitably omitted.

Table 2 illustrates an example of a common field including three different RU Allocation sub fields according to the second exemplary embodiment.

**[Table 2]**

| | CRC | 4 | Calculated CRC value | Sub field | Number of bits | Description |
|---|---|---|---|---|---|---|
| Common field | | | | U-SIG Over Flow | 16 | Control information that does not fit into symbols of U-SIG. Stores information about Spatial Reuse, information about GI, the number of symbols of UHR-LTF, LDPC, and information about FEC. |
| | RU Allocation-2 | M × 9 | Provided for 160 MHz or higher. | RU Allocation-1 | N × 9 | Indicates RU allocation used in data portion of frequency axis. |
| | | | Indicates RU allocation used in data portion of frequency axis. | | | N=1: UHR MU PPDU allocation with 20 MHz and 40 MHz |
| | | | M=2: UHR MU PPDU allocation with 160 MHz | | | N=2: UHR MU PPDU allocation with 80 MHz, 160 MHz, 320 MHz, 480 MHz, and 640 MHz |
| | | | M=6: UHR MU PPDU allocation with 320 MHz, 480 MHz, and 640 MHz | | | |
| | CRC | 4 | Calculated CRC value | | | |
| | | | | | | |
| | RU Allocation-3 | L × 9 | Provided for 480 MHz or higher. | | | |
| | | | Indicates RU allocation used in data portion of frequency axis. | | | |
| | | | L=4: UHR MU PPDU allocation with 480 MHz | | | |
| | | | L=8: UHR MU PPDU allocation with 640 MHz | | | |
| | CRC | 4 | Calculated CRC value | | | |
| | | | | | | |

The common field includes the RU Allocation-1 sub field, the RU Allocation-2 sub field, and the RU Allocation-3 sub field. These sub fields indicating the RU allocation information are formed of N × 9, M × 9, and L × 9 bits, respectively. The correspondences between the multipliers (N, M, and L) and the bandwidths (20 MHz band, 40 MHz band, 80 MHz band, 160 MHz band, 320 MHz band, 480 MHz band, and 640 MHz band) are illustrated in Table 2.

The present exemplary embodiment differs from the first exemplary embodiment in that the sizes of the RU Allocation-1 and the RU Allocation-2 sub fields are common to those in the IEEE802.11be standard, which is the communication standard of the previous generation.

If the bandwidth of the UHR MU PPDU transmitted by the communication apparatus 101 is lower than 40 MHz, the communication apparatus 101 expresses the RU allocation by using only the RU Allocation-1, like the first exemplary embodiment. If the bandwidth of the UHR MU PPDU transmitted by the communication apparatus 101 is equal to or higher than 160 MHz and equal to or lower than 320 MHz, the communication apparatus 101 expresses the RU allocation by using the RU Allocation-1 and the RU Allocation-2 sub fields.

If the bandwidth used exceeds 320 MHz, the communication apparatus 101 expresses the RU allocation by using the RU Allocation-1, RU Allocation-2, and RU Allocation-3. For example, if the bandwidth is 640 MHz, the multipliers are N = 2, M = 6, and L = 8.

According to the first exemplary embodiment, if the communication bandwidth is 640 MHz, the multipliers are N = 2 and M = 14. The value N + M according to the first exemplary embodiment is equal to the value N + M + L according to the second exemplary embodiment. More specifically, even when expressing the RU allocation with RU Allocation-1, RU Allocation-2, and RU Allocation-3, the total number of bits for expressing the RU allocation is the same as that according to the first exemplary embodiment.

The correspondences between the allocation patterns and the RU Allocation sub fields, and the mechanism for notifying of the RU allocation information for 640 Mhz by using the first UHR-SIG and the second UHR-SIG (described above with reference to Fig. 10) can be similar to those according to the first exemplary embodiment.

As described above, the present exemplary embodiment makes it possible to notify of the information about the RU allocation in the 480 MHz and 640 MHz bandwidths by using a method similar to that according to the first exemplary embodiment. Depending on the modulation method and encoding ratio of the UHR-SIG, the RU Allocation-3 sub field can be divided into two different symbols before transmission. Further, when dividing the RU Allocation-3 sub field into two different symbols before transmission, the name of the sub field can be changed to a different name. In this case, for example, the communication apparatus 101 generates a first symbol including the RU Allocation-3 sub field for storing information for up to 54 bits (9 bits × 6). The, the communication apparatus 101 generates a second symbol including the RU Allocation-4 sub field for storing information for up to 54 bits (9 bits × 6).

### <Modifications>

The exemplary embodiments have been described above centering on a method for notifying of the RU allocation information with a greater bandwidth by increasing the size of the RU Allocation sub field in the SIG field. However, using other methods makes it possible to notify of the RU allocation information with a greater bandwidth.

According to the above-described exemplary embodiments, the communication apparatus 101 transmits the first UHR-SIG by using the odd-numbered sub channels and transmit the second UHR-SIG by using the even-numbered sub channels to perform data multiplexing in the frequency domain and notify of the RU allocation information. The present modification notifies of the RU allocation information by using four different channels to enable notifying of the RU allocation information for 640 Mhz without increasing the number of RU Allocation sub fields. The structure of the RU Allocation field is similar to that of the RU Allocation-1 and the RU Allocation-2 fields according to the second exemplary embodiment. In other words, the present modification employs a structure of the RU Allocation field similar to that of the 802.11be standard.

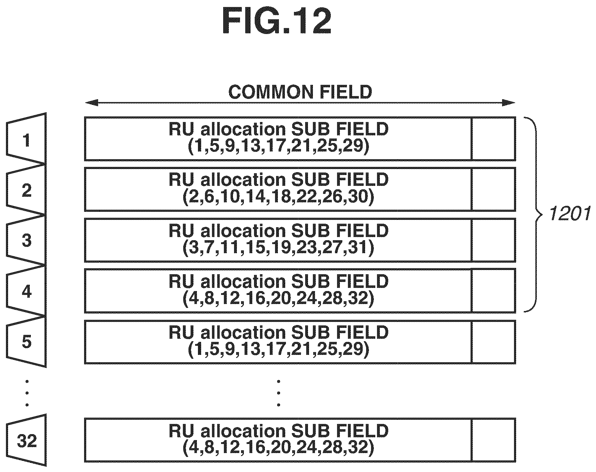

A specific method will be described below with reference to Fig. 12. Fig. 12 is a schematic view illustrating another exemplary embodiment for notifying of the RU allocation information for 640 Mhz with the preamble.

According to the present exemplary embodiment, the communication apparatus 101 communicates the first UHR-SIG field indicating the RU allocations of the 1st, 5th, 9th, 13th, 17th, 21st, 25th, and 29th 20-MHz sub bands by using the first sub channel configuring the 640 Mhz bandwidth. The communication apparatus 101 communicates the second UHR-SIG field indicating the RU allocations of the 2nd, 6th, 10th, 14th, 18th, 22nd, 26th, and 30th 20-MHz sub bands by using the second sub channel configuring the 640 Mhz bandwidth. The communication apparatus 101 communicates a third UHR-SIG field indicating the RU allocations of the 3rd, 7th, 11th, 15th, 19th, 23rd, 27th, and 31st 20-MHz sub bands by using the third sub channel configuring the 640 Mhz bandwidth. The communication apparatus 101 communicates a fourth UHR-SIG field indicating the RU allocations of the 4th, 8th, 12th, 16th, 20th, 24th, 28th, and 32nd 20-MHz sub bands by using the fourth sub channel configuring the 640 Mhz bandwidth. The communication apparatus 100 repetitively transmits four different content channels 1201 illustrated in Fig. 12 for the following four channels to enable notifying of the RU allocations for 640 Mhz. Thus, the communication apparatus can also notify of the RU allocation of the bandwidths exceeding 320 Mhz by increasing the number of content channels.

When transmitting the UHR MU PPDU with the 480 Mhz bandwidth, a similar mechanism makes it possible to transmit the first to the third UHR-SIGs by using the first to the third sub channels. In either case, the RU allocation information for up to eight 20-Mhz sub channels (RU allocation information for the 160 Mhz bandwidth) is stored in each UHR-SIG.

Although, according to the above-described exemplary embodiments, the AP 101 is an AP in the network, the AP 101 may be an apparatus that also operates as an STA. More specifically, the AP 101 may be an apparatus having both the capability as a UHR AP STA and the capability as a UHR Non-AP STA. In this case, the AP 101 performs data communication with another communication apparatus of the frame transmission source by using the RU indicated by the RU Allocation sub field included in the UHR-SIG of the received UHR MU PPDU.

Further, according to the present exemplary embodiment, the PHY frame of the UHR MU PPDU includes the legacy field that can be decoded by a communication apparatus conforming to the IEEE801.11 series standards earlier than the IEEE802.11be standard, the present exemplary embodiment is not limited thereto. More specifically, the PHY frame of the UHR MU PPDU may not include the L-STF, L-LTF, L-SIG, and RL-SIG. In this case, the PHY frame of the UHR MU PPDU includes the UHR-STF, UHR-LTF, U-SIG, UHR-SIG, UHR-LTF, data field, and Packet Extension from the top portion.

The name of each field, bit positions, and the number of bits according to the present exemplary embodiment are not limited to those described in the present exemplary embodiment. Similar information may be stored in the PHY frame with different field names, different positions, and different number of bits.

### <Other Exemplary Embodiments>

Although the present invention has been described above based on the exemplary embodiments, the present invention can be embodied, for example, as a system, an apparatus, a method, a program, or a recording medium (storage medium). More specifically, the present exemplary embodiment is also applicable to a system including a plurality of devices (e.g., a host computer, interface apparatus, imaging apparatus, and web application) or an apparatus including one device.

The present invention can also be achieved when a program for implementing at least one of the functions according to the above-described exemplary embodiments is supplied to a system or apparatus via a network or storage medium, and at least one processor in a computer of the system or apparatus reads and executes the program. The present invention can also be achieved by a circuit such as an Application Specific Integrated Circuit (ASIC) for implementing at least one function.

### (Other Exemplary Embodiments)

The present invention can also be achieved when a program for implementing at least one of the functions according to the above-described exemplary embodiments is supplied to a system or apparatus via a network or storage medium, and at least one processor in a computer of the system or apparatus reads and executes the program. The present invention can also be achieved by a circuit such as an Application Specific Integrated Circuit (ASIC) for implementing at least one function.

The present invention is not limited to the above-described exemplary embodiments but can be modified and changed in diverse ways without departing from the spirit and scope thereof. Therefore, the following claims are appended to disclose the scope of the present invention.

The present application claims priority based on Japanese Patent Application No. 2022-125626, filed on August 5, 2022, which is incorporated herein by reference in its entirety.

## Claims

1. A communication apparatus comprising:
a transmission unit configured to transmit an Ultra High Reliability (UHR) Multi User (MU) Physical Layer Protocol Data Unit (PPDU) including a Legacy-Signal Field (L-SIG) and a Universal-Signal Field (U-SIG),
wherein, in a case where the UHR MU PPDU with a bandwidth exceeding 320 Mhz is transmitted, the transmission unit transmits the UHR MU PPDU including, after the U-SIG, an RU Allocation-1 sub field, an RU Allocation-2 sub field, and an RU Allocation-3 sub field, and
wherein, in a case where the UHR MU PPDU with a bandwidth of 320 Mhz is transmitted, the transmission unit transmits the UHR MU PPDU including, after the U-SIG, the RU Allocation-1 sub field and the RU Allocation-2 sub field but not including the RU Allocation-3 sub field.

2. A communication apparatus comprising:
a transmission unit configured to transmit a UHR Multi User (MU) Physical Layer Protocol Data Unit (PPDU) including a Legacy-Signal Field (L-SIG) and a Universal-Signal Field (U-SIG),
wherein, in a case where the UHR MU PPDU with a bandwidth of 320 Mhz is transmitted, the transmission unit transmits a UHR MU PPDU including, after the U-SIG, an RU Allocation-1 sub field and an RU Allocation-2 sub field including a predetermined number of bits, and
wherein, in a case where the UHR MU PPDU with a band width exceeding 320 Mhz is transmitted, the transmission unit transmits a UHR MU PPDU including, after the U-SIG, the RU Allocation-1 sub field and the RU Allocation-2 sub field that includes at least a larger number of bits than the predetermined number of bits.

3. The communication apparatus according to Claim 1 or 2, wherein the transmission unit includes an antenna to be used to transmit the UHR MU PPDU.

4. The communication apparatus according to any one of Claims 1 to 3, wherein the RU Allocation-1 sub field included after the U-SIG is included in a Common Field of an Ultra High Reliability Signal Field (UHR-SIG) as a symbol following the U-SIG.

5. The communication apparatus according to any one of Claims 1 to 4, wherein the communication apparatus is an access point.

6. The communication apparatus according to Claim 1,
wherein the RU Allocation-1 sub field includes a predetermined number of bits required to represent an RU allocation in a sub band multiplied by N,
wherein the multiplier N is 1 for 20 MHz and 40 MHz bandwidths, and 2 for 80 MHz, 160 MHz, 320 MHz, 480 MHz, and 640 MHz bandwidths,
wherein the RU Allocation-2 sub field includes the predetermined number of bits multiplied by M,
wherein the multiplier M is 2 for the 160 MHz bandwidth, and 6 for the 320 MHz bandwidth, and
wherein the RU Allocation-3 sub field is 4 for the 480 MHz bandwidth, and 8 for the 640 MHz bandwidth.

7. The communication apparatus according to Claim 2,
wherein the RU Allocation-1 sub field includes a predetermined number of bits required to represent an RU allocation in a sub band multiplied by N,
wherein the multiplier N is 1 for the 20 MHz and 40 MHz bandwidths, and 2 for the 80 MHz, 160 MHz, 320 MHz, 480 MHz, and 640 MHz bandwidths,
wherein the RU Allocation-2 sub field includes the predetermined number of bits multiplied by M, and
wherein the multiplier M is 2 for the 160 MHz bandwidth, 6 for the 320 MHz bandwidth, 10 for the 480 MHz bandwidth, and 14 for the 640 MHz bandwidth.

8. The communication apparatus according to any one of Claims 1 to 7, wherein, in a case where the UHR MU PPDU with a bandwidth exceeding 40 Mhz is transmitted, the transmission unit transmits the UHR MU PPDU including first RU allocation information in the UHR-SIG which is transmitted in a first sub band used for transmitting the UHR MU PPDU and including second RU allocation information, different from the first RU allocation information, in the UHR-SIG to be transmitted at the same time in a second sub band.

9. The communication apparatus according to any one of Claims 1 to 8, wherein the communication apparatus has a network storage function.

10. A method for controlling a communication apparatus, the method comprising:
transmitting an Ultra High Reliability (UHR) Multi User (MU) Physical Layer Protocol Data Unit (PPDU) including a Legacy-Signal Field (L-SIG) and a Universal-Signal Field (U-SIG),
wherein, in a case where the UHR MU PPDU with a bandwidth exceeding 320 Mhz is transmitted, the transmission transmits the UHR MU PPDU including, after the U-SIG, an RU Allocation-1 sub field, an RU Allocation-2 sub field, and an RU Allocation-3 sub field, and
wherein, in a case where the UHR MU PPDU with a bandwidth of 320 Mhz is transmitted, the transmission transmits the UHR MU PPDU including, after the U-SIG, the RU Allocation-1 sub field and the RU Allocation-2 sub field but not including the RU Allocation-3 sub field.

11. A method for controlling a communication apparatus, the method comprising:
transmitting a UHR Multi User (MU) Physical Layer Protocol Data Unit (PPDU) including a Legacy-Signal Field (L-SIG) and a Universal-Signal Field (U-SIG),
wherein, in a case where the UHR MU PPDU with a bandwidth of 320 Mhz is transmitted, the transmission transmits the UHR MU PPDU including, after the U-SIG, an RU Allocation-1 sub field and an RU Allocation-2 sub field including a predetermined number of bits, and
wherein, in a case where the UHR MU PPDU with a band width exceeding 320 Mhz is transmitted, the transmission transmits a UHR MU PPDU including, after the U-SIG, the RU Allocation-1 sub field and the RU Allocation-2 sub field that includes at least a larger number of bits than the predetermined number of bits.

12. A program for causing a computer to execute the method for controlling a communication apparatus according to Claim 10 or 11.
